# EUROPEAN PATENT APPLICATION

(11) **EP 2 065 738 A1**
(43) Date of publication of application: **03.06.2009**
(21) Application number: 08020721.0
(22) Date of filing: 28.11.2008
(51) Int. Cl.: G02B 6/26, G01N 21/03

(54) **Optical apparatus**

(30) Priority: 01.12.2007 GB 0723561
(71) Applicant: Smiths Group PLC, London NW11 8DS (GB)
(72) Inventor: Poulter, Graham, Orpington, Kent BR6 0EP (GB); Gunning, Mark, Redhill, Surrey RH1 1JN (GB)
(74) Representative: Watts, Peter Graham

(57) **Abstract**

An optical apparatus includes an optical fibre having a radiation inlet (32), a radiation outlet (32) and a termination (31) by which optical radiation is transmitted from the fibre, a retroreflector spaced from the termination and aligned with the path of radiation from the termination such that the radiation is reflected back along the same path onto the termination and the reflected radiation passes back along the same fibre to the radiation inlet.

## Description

This invention relates to optical apparatus.

The invention is more particularly concerned with optical apparatus of the kind employing an optical fibre to transmit an optical signal to detection apparatus.

Information can be often be obtained about the nature of a substance by supplying optical radiation to a cell or the like containing the substance and detecting the effect the substance has on the radiation. Typically, the apparatus may include a process cell to which a fluid, such as a gas, vapour, liquid or other flowable substance is supplied, such as in line in a processing system. Optical radiation, such as infra-red radiation, is supplied to the cell via a first optical fibre cable. The termination of the cable is arranged to direct radiation across a part of the cell so that it passes through the fluid. A second optical fibre cable is arranged with its termination in line with the first termination so that radiation from the first cable is directed onto the second cable. The second cable typically extends to a remote spectrometer by which the radiation is analysed and information obtained about the fluid in the cell. Some process cells are arranged with the inlet and outlet optical fibre terminations side-by-side and have a mirror mounted in the cell opposite the terminations so that the incoming radiation passes through the fluid and is reflected by the mirror back through the fluid onto the outlet fibre termination, making two passes through the fluid.

The optical fibre cables typically used in such apparatus include multimode fibres with a relatively large diameter of between about 200-600µm. These multimode fibres have various disadvantages. They are relatively expensive, which is a particular problem because two cables are needed and they often extend for considerable distances, such as in chemical plants or other hazardous environments where the monitoring cannot readily be carried out close to the process cell. Another problem is that they are not suited to use with coherent radiation sources because of interference effects caused by the multiple, different path lengths along the cable for the different propagation modes supported by the fibre. They cannot, therefore, be used with tunable diode lasers without significant deterioration in signal-to-noise ratio. These sources would otherwise be advantageous in such applications. Single-mode fibre cables would be preferable because they can be used with coherent sources and are of lower cost. However, the considerably smaller core diameter of single-mode fibres (typically around 9µm for telecommunications grade fibre at 1550nm) makes it much more difficult to align input and output fibres accurately and even a small misalignment produces a considerable reduction in transmission to the output fibre. This is a particular problem in industrial applications where the process cell may be subject to vibration, shock and large temperature variations so that, even if the cable terminations were accurately aligned initially, there would he a high risk that they would become sufficiently misaligned during use to degrade the output signal such as to make analysis unreliable.

It is an object of the present invention to provide alternative optical apparatus and systems.

According to one aspect of the present invention there is provided optical apparatus including an optical fibre capable of supporting upto 10 propagation modes, said optical fibre having a radiation inlet/outlet at one end and a termination by which optical radiation is transmitted from the fibre at the other end, a retroreflector spaced from the termination and aligned with the path of radiation from the termination such that the radiation is reflected back along the same path onto the termination and the reflected radiation passes back along the same fibre to the radiation inlet.

The optical fibre is preferably a single-mode fibre over the wavelengths of radiation used and could be of polarisation maintaining type. The apparatus preferably includes a circulator by which radiation is supplied to and from the optical fibre.

According to another aspect of the present invention there is provided an optical detection cell including a housing having a cavity therein for receiving a substance, an optical aperture in the housing, an optical fibre which is secured relative to the optical aperture to direct radiation into the cavity, retroreflector means mounted opposite the aperture such that radiation from the optical fibre passes through the substance in the cavity onto the retroreflector means and is reflected by the retroreflector means back to the optical fibre.

The optical fibre is preferably a single-mode fibre. The optical detection cell may be a process cell including an inlet and an outlet by which fluid can be supplied to flow through the cavity.

According to a further aspect of the present invention there is provided a spectrometer system including a source of optical radiation, an optical detector, a detection cell, an optical fibre cable arrangement extending between the source of optical radiation, the detector and the detection cell, the detection cell having a cavity for containing a substance for spectrometer analysis and being arranged such that radiation from the optical fibre cable arrangement is directed through the substance onto a retroreflector to be reflected back along the same path to the optical fibre arrangement such that the detector receives radiation after two passes through the substance along the same path.

According to a preferred embodiment the optical fibre cable arrangement preferably includes a single-mode fibre. Preferably the optical fibre cable arrangement also includes an optical circulator by which radiation is supplied from the source to the detection cell and from the detection cell to the detector. The optical detection cell may be a process cell including an inlet and an outlet by which fluid can be supplied to flow through the cavity.

The invention is now be described, by way of example only, with reference to the accompanying drawings, in which:
Figure 1 shows , a system in accordance with the present invention;
Figure 2 is a cross-sectional view through the process cell of the system illustrated in figure 1, with the optical fibre cable arrangement disconnected;
Figure 3 is a cross-sectional view of one end of the process cell illustrated in figure 2, with the optical fibre cable arrangement connected, to an enlarged scale;
Figure 4 is a cross-sectional view of the opposite end of the process cell illustrated in figure 2, to an enlarged scale;
Figure 4a is a perspective view of the radiation beam reflecting off the retroreflector located at the end of the process cell illustrated in figure 4;
Figure 5 is a sectional view across the retroreflector of the process cell illustrated in figure 2, along the line V-V in Figure 4;
Figure 6 is a cross-sectional view of the end sections of a modified embodiment of the invention;
Figure 7 is a section along the line VII-VII of figure 6; and
Figure 8 is an end view of an alternative form of retroreflector that may be used in the process cells of the present invention.

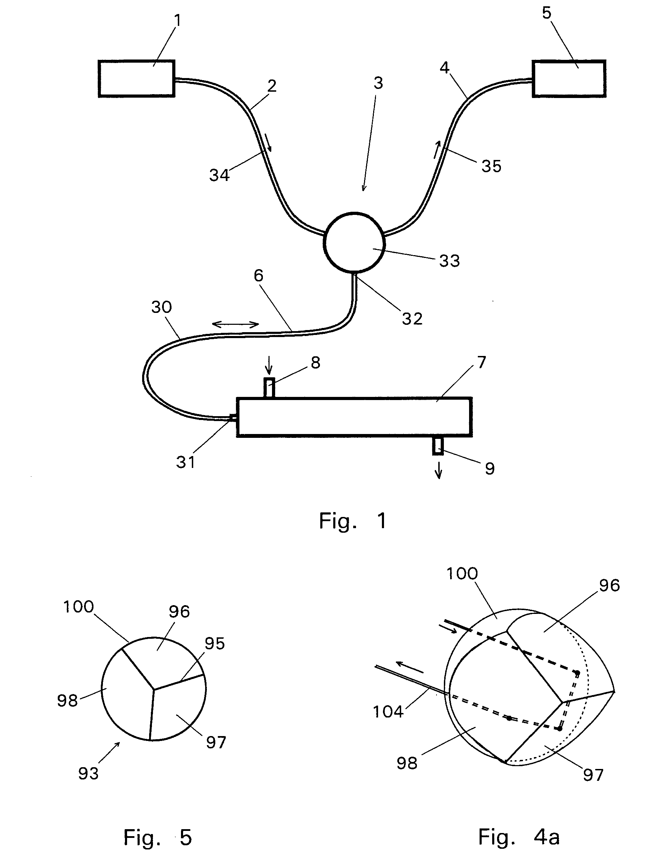

Referring first to Figure 1, the system includes a source of radiation such as of a tunable diode laser 1, or other source of similar coherent radiation, connected to provide an output to a one arm 2 of an optical fibre arrangement 3. A second arm 4 of the optical fibre arrangement 3 is connected to provide an output to a detector 5. A third arm 6 of the optical fibre arrangement 3 provides an input to and receives an output from a detection cell in the form of a process cell 7, which receives a flow of fluid through it via an inlet 8 and an outlet 9.

The tunable diode laser 1 may be of a conventional form arranged to provide a radiation output at near infra-red wavelengths, typically between about 0.6µm and 25µm. The radiation is coherent with a very narrow bandwidth. Other forms of radiation source are possible. The source could be a broadband source of radiation in which case the detector would be replaced by a spectrometer.

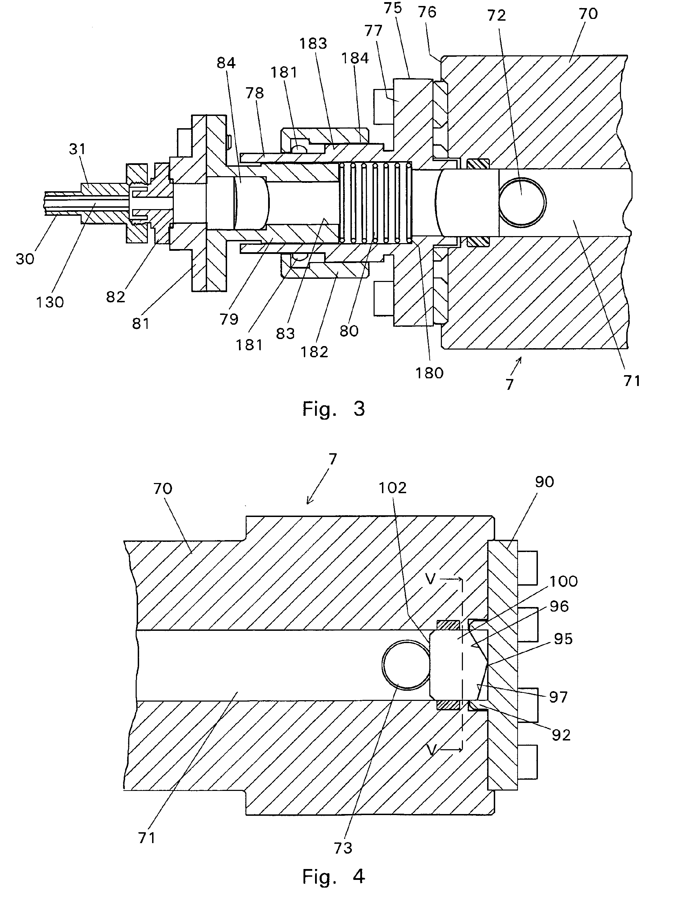

The optical fibre arrangement 3 comprises a length of single-mode optical fibre cable 30 providing the third arm 6. The fibre 130 (Fig 3) in the cable 30 is typically of silica or other material transparent to the wavelength being transmitted. The fibre is typically around 125µm in diameter with a core of around 9µdiameter, for a 1550nm operating wavelength so that it transmits radiation along a single path through the fibre, that is, in a single mode. The cable 30 may have an outer protective jacket of any conventional kind suitable for the environment in which the cable is being used. The small diameter of the fibre 130 means that the overall diameter of the cable 30 can be relatively small and that it can be highly flexible. The cable 30 may be many tens or hundreds of metres long according to where the detector 5 and source 1 are to be located relative to the process cell 7. One end of the cable 30 is terminated by a termination or connector 31, which is secured to a first end 76 of the process cell 7. The opposite end 32 of the cable 30 connects with, or is formed as a part of, an optical fibre circulator 33 of known kind. The circulator 33 also connects with the first and second arms 2 and 4 of the optical fibre arrangement 3, which are likewise provided by single-mode optical fibre cables 34 and 35 respectively. The circulator 33 is arranged to supply radiation from the source 1 via the cable 34 to only the process cell cable 30, and to supply return radiation from the process cell cable 30 to only the detector cable 35. Instead of the circulator 33 it would be possible to use a beam- splitter arrangement such as including fibre optics or a bulk-optics semi-transparent mirror to divert returned radiation from the cable 30 but such an arrangement would have much higher losses than a circulator. The circulator 33 introduces very small losses so that substantially all the radiation from the source cable, 34 passes to the process cell cable 30, and substantially all the returned radiation from the process cell cable 30 passes to the detector cable 35. Circulators also have an advantage when being used with laser sources because they substantially isolate the source from returned radiation, which could otherwise make the laser unstable.

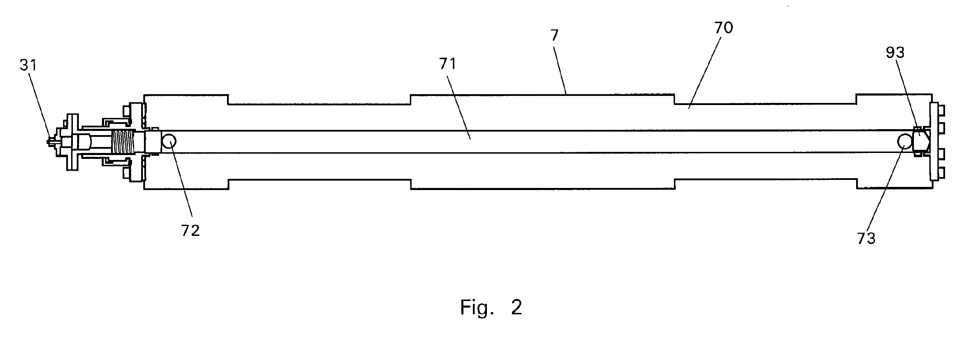

With reference now also to Figures 1 to 5, the process cell 7 can be of many different kinds but, in the present embodiment comprises a housing 70 of substantially tubular form machined of a metal and having a straight, axial bore extending along its length providing a cavity 71 within the housing 70. At one end 76 of the cell 7, the inlet 8 opens into the cavity 71 via an opening 72. At the opposite end 91 of the cell 7, the outlet 9 opens from the cavity 71 via an opening 73.

The cavity 71 at end 76 of process cell 7, is closed by an end fitting 75 screwed to the end face of the housing 70. The end fitting 75 comprises a metal plate 77 with a central, cylindrical collar 78 having a bore 83, which receives within it as an accurate sliding fit a cylindrical sleeve 79. An inner end of the sleeve 79 bears on one end of a helical spring 80 in the bore 83, the other end of spring 80 engaging a ledge 180 formed adjacent the inner end of the bore 83. The sleeve 79 supports three radially-extending pins 181, which project through longitudinally-extending slots (not visible) in the collar 78. An outer ring 182 has an internal screw thread 183 engaged with an external screw thread 184 on the collar 78. A reduced diameter end portion of the ring 182 bears on the pins 181 and is resiliently retained in engagement therewith by spring 80, so that the sleeve 79 can be moved axially forwards or backwards along the bore 83, to effect focusing by screwing the ring 182 along the collar 78. An end plate 81 is screwed to the outer end of the sleeve 79 and this supports an externally-threaded fitting 82. The end fitting 75 supports two optical components that serve both an optical and sealing function. In particular, a meniscus type focusing lens 84 is mounted in the bore of sleeve 79 so that its axial position can be altered with that of the sleeve 79. The lens 84 has an outer concave surface and an inner convex surface. A focusing lens 85 of lower power than lens 84 and having a planar inner surface and a shallow convex outer surface, is mounted in the bore of collar 78 at the inner end thereof and projects into the adjacent end of the cavity 71, which forms an opening or aperture into the cavity. The lenses 84 and 85 are made of materials that are capable of surviving the environmental conditions to which they are exposed. The material of the lens 85, in particular, is chosen to resist damage from contact with the fluid in the cavity 71 to which it is exposed. Sapphire is a particularly suitable material that is resistant to many chemicals and to large temperature variations, it is also transparent to infra-red wavelengths. The termination 31 at the end of the cable 30 is screwed onto the fitting 82 with the end of the single-mode fibre 130 in the cable located at the focus of the lens system provided by the lenses 84 and 85, so that radiation emerging from the cable 30 is formed into a parallel beam directed axially along the length of the cavity 71.

The opposite end of the bore of cavity 71 in the process cell 7 is closed by an end plate 90 screwed to the end face of the housing 70 at end 91. The inner surface of the end plate 90 is formed with a retaining ring 92, which supports a retroreflector 93. The retroreflector 93 is provided by a block 100 of an optically-transparent material suited to the environmental conditions to which it is exposed, such as sapphire. The surface 95 of the block 100 adjacent endplate 90 is formed with three planar facets 96, 97 and 98 inclined mutually at 90° to one another. The surface 102 on the block 100 remote from end plate 90 is plane and orthogonal to the axis of the cavity 71. Radiation incident on the transparent block 100 passes through it to be incident on one of the three inclined facets 96, 97, 98 and is reflected within the block 100 from said one facet to a second facet and then to a third facet from which it is reflected back parallel to the initial incident direction as indicated by the ray line 104, as shown in figure 4a. In this way, radiation incident on the retroreflector 93 over a range of angles is reflected back along the same path.

Radiation from the fibre 130 is directed axially along the cavity 71 of the cell 7 through fluid present in the cavity 71. The radiation is incident on the retroreflector 93 and is then reflected back through the cavity 71 at the same angle so that the radiation makes a double pass through the fluid and the reflected radiation is incident on the termination 31 of the fibre 130. The reflected radiation is reflected back along the same path as the incident radiation, irrespective of any slight misalignment of the optical fibre cable termination 31 or other defect causing a slight deviation of the radiation from a true axial path and will not have any effect on the radiation received back by the termination even where fibres with a very small diameter are used, such as in single-mode optical fibre cables.

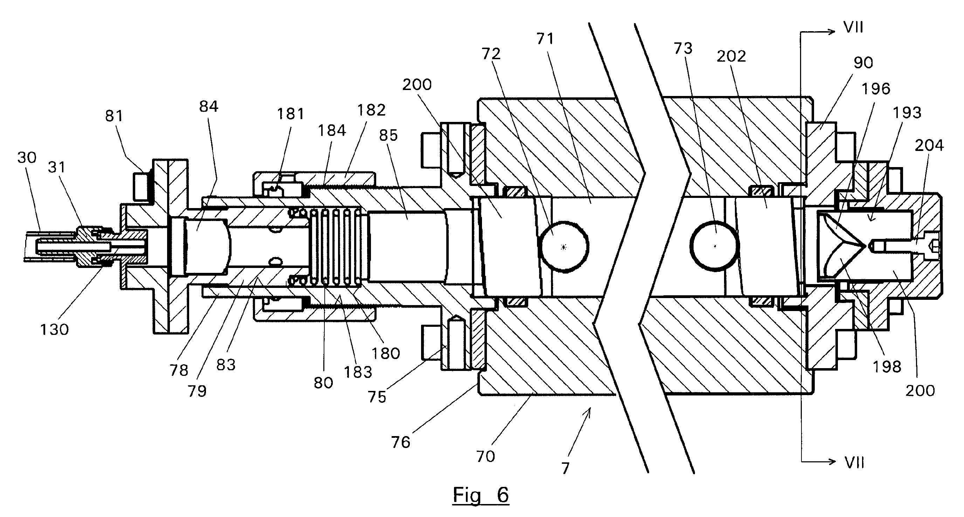

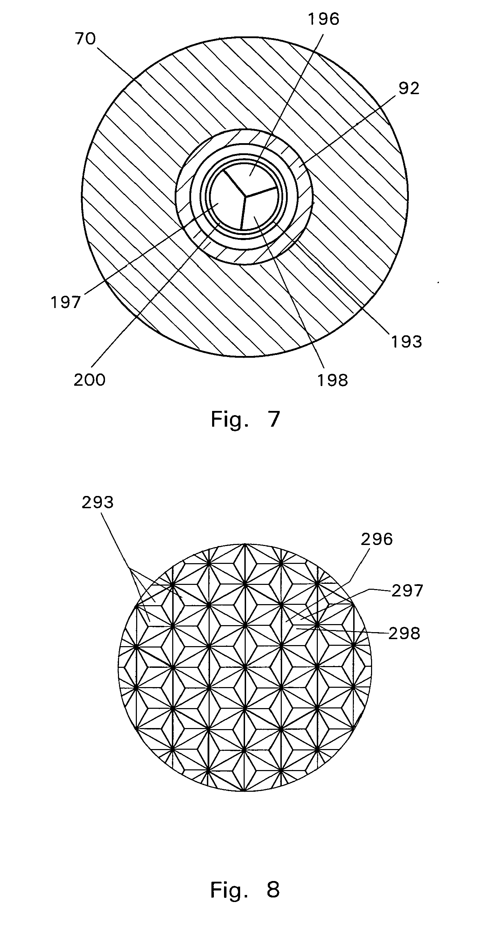

In the modified embodiment illustrated in figures 6 and 7, a pair of windows 200, 202 are secured in the cavity 71 one adjacent each of the ends of the cavity, to seal the cavity. The windows 200, 202 and made of materials, for example sapphire, that are capable of surviving the environmental conditions to which they are exposed and are transparent to infra-red wavelengths or the wavelengths of the light produced by the source 1. The faces of the windows 200, 202 are inclined to the axis of the cavity 71 so that any light reflected from the windows will be reflected none axially and will not be returned along the same path as the incident and reflected beams, thereby avoiding interference with the incident and reflected beams.

The end plate 90 locates a retroreflector 193 in the form of a mirror block 200, coaxially of the cavity 71, the mirror block 200 being retained in place by retaining bolt 204. The mirror block 193 defines three mirror surfaces 196 to 198, inclined mutually at 90° to one another, the mirror surfaces facing the incident beam emitted from the termination of the fibre optic cable 30. In similar manner to the retroreflector 93 of the first embodiment. the mirror block 193 reflects the incident beam from one mirror surface 196 to 198, a second mirror surface and then to a third mirror surface from which it is reflected back parallel to the path of the initial beam, to the termination 31 of the fibre optic cable 30.

The structure of the process cell illustrated in figures 6 and 7 is otherwise substantially identical and functions in the same manner as that illustrated in figures 1 to 5.

According to a further modification the retroreflector 93, 193 may be in the form of an array of mini retroreflectors 293, each mini retroreflector 293 defining three facets or mirror surfaces 296, 297, 298, inclined mutually at 90° to one another, as illustrated in figure 8.

In the present examples, the fluid used is a gas or vapour, which requires a relatively long path length to produce a measurable effect on the transmitted radiation. If a liquid were used the cavity 71 could be much shorter. While in the above embodiments the fibre optic end termination 31 and focusing assembly is mounted at one end of a process cell 7 and the retroreflector 93, 193, 293 is mounted at the other end, the end termination and focusing assembly and retroreflector 93,193,293 may be separate components which may, for example be mounted in aligned relationship on opposite sides of a vessel or conduit to detect fluid in or flowing through the vessel or conduit, for example gasses flowing through a flue.

The arrangement of the present invention enables a single-mode fibre cable to be used with a process cell or other optical detection device. It also enables a single cable to be used to supply radiation both to and from an optical device. These factors enable considerable expense, bulk and weight to be saved especially where the optical device is located at a considerable distance from the source and detector. The invention also avoids the modal noise produced when using multi-mode fibre cables. The cable terminations and the process cell are relatively easy to set up because no special care has to be taken to ensure accurate alignment. There is also less risk of loss of output signal as misalignment increases over time caused by vibration, shock, temperature changes and the like.

In a practical system where it is necessary to monitor several process cells or other optical devices, a single source and spectrometer could be used with radiation being switched to different cable arrangements extending to the different devices in turn.

It will be appreciated that the invention is not confined to use with process cells but could be used with other optical devices such as for detecting the presence of objects or for detection employing fluorescence techniques. The invention may be used with any optical radiation from infra-red to ultra-violet.

## Claims

1. An optical apparatus **characterised by** an optical fibre (130) capable of supporting upto 10 propagation modes, said fibre (130) having a radiation inlet/outlet (32) and a termination (31) by which optical radiation is transmitted from the fibre (130), a retroreflector (93,193,293) spaced from the termination (31) and aligned with the path of radiation from the termination (31) such that the radiation is reflected back along the same path onto the termination (31)and the reflected radiation passes back along the same fibre (130) to the radiation inlet (32).

2. An optical apparatus according to claim 1 **characterised in that** the optical fibre (130) is a single-mode fibre at the wavelengths of the radiation used.

3. An optical apparatus according to claim 1 or 2 **characterised in that** means (33) is provided at the radiation inlet (32) for connecting the optical fibre (130) to a source (1) of radiation by which incident radiation may be supplied to the optical fibre (130) to pass through the optical fibre (130) from the inlet (32) to the termination (31), said means serving to divert reflected radiation passing through the optical fibre (130) from the termination (31) to the inlet (32), to detector means (5).

4. An optical apparatus according to claim 3 **characterised in that** said means (33) prevents reflected radiation from being transmitted to the radiation source (1).

5. An optical apparatus according to claim 3 or 4 **characterised in that** said means (33) comprises an optical circulator.

6. An optical apparatus according to any one of claims 3 to 5 **characterised in that** the source (1) of radiation is tunable diode laser or other source of coherent radiation.

7. An optical apparatus according to any one of claims 3 to 6 **characterised in that** the source (1) and the detector (5) are connected to said means (33) by optical fibre cables (34,35).

8. An optical apparatus according to any one of the preceding claims **characterised in that** the termination (31) is provided with focusing means (84,85) by which radiation emitted from the termination (31) is focused into a parallel beam (104).

9. An optical apparatus according to any one of the preceding claims **characterised in that** the retroreflector (93) comprises an optically transparent block (100), the end (95) of the block (100) remote from the termination (31) having three facets (96,97,98), the facets (96,97,98) being mutually inclined at 90° to one another.

10. An optical apparatus according to any one of claims 1 to 8 **characterised in that** the retroreflector (193) comprises three mirror surfaces (196,197,198) facing the termination (31), the mirror surfaces (196,197,198) being mutually inclined at 90° to one another.

11. An optical apparatus according to any one of claims 1 to 8 **characterised in that** the retroreflector (93,193) comprises an array of mini retroreflectors (293), each mini retroreflector (293) comprising three facets or three mirror surfaces (296,297,298), the facets or mirror surfaces (296,297,298) being mutually inclined at 90° to one another.

12. An optical apparatus according to any one of the preceding claims **characterised in that** the termination (31) and retroreflector (93,193,293) are mounted at opposite ends of an optical detection cell (7) having a housing (70) defining a cavity (71), an optical aperture (85;200) being provided in the housing (70) through which radiation may be directed into the cavity (71), the retroreflector (93,193,293) being positioned to reflect radiation back through the optical aperture (85,200).

13. An optical apparatus according to claim 13 or 14 **characterised in that** the termination (31) and retroreflector (93,193,293) are isolated from fluid in the cavity (71) by optically transparent windows (200,202), the faces of the windows (200,202) being inclined to the path of the radiation between the termination (31) and the retroreflector (93,193,293).

14. An optical detection cell (7) **characterised by** a housing (70) having a cavity (71) therein for receiving a substance, an optical aperture (85;200) in the housing (70), an optical fibre (130) capable of supporting upto 10 propagation modes, said fibre (130) being secured relative to the optical aperture (85;200) to direct radiation into the cavity (71), retroreflector means (93,193,293) mounted opposite the aperture (85;200) such that radiation from the optical fibre (130) passes through the substance in the cavity (71) onto the retroreflector means 993,193,293) and is reflected by the retroreflector means (93,193,293) back to the optical fibre (130).

15. A spectrometer system **characterised by** a source (1) of optical radiation, an optical detector (5), a detection cell (7), an optical fibre cable arrangement (3) extending between the source (1) of optical radiation, the detector (5) and the detection cell (7), the detection cell (7) having a cavity (71) for containing a substance for spectrometer analysis and being arranged such that radiation from the optical fibre cable arrangement (3) is directed through the substance onto a retroreflector (93,193,293) to be reflected back along the same path to the optical fibre cable arrangement (3) such that the detector (5) receives radiation after two passes through the substance along the same path.
